# EUROPEAN PATENT SPECIFICATION

(11) **EP 2 139 252 B1**
(45) Date of publication and mention of the grant of the patent: **24.12.2014**
(21) Application number: 07845766.0
(22) Date of filing: 30.11.2007
(51) Int. Cl.: H04W 4/00

(54) **METHOD AND EQUIPMENT FOR REPORTING SUPPORT CAPABILITY OF CELL TO UPLINK HIGH-ORDER MODULATION**
VERFAHREN UND GERÄTE ZUM MELDEN DER UNTERSTÜTZUNGSFÄHIGKEIT EINER ZELLE FÜR AUFWÄRTSSTRECKENMODULATION HÖHERER ORDNUNG
PROCÉDÉ ET ÉQUIPEMENT DESTINÉS À INDIQUER LA CAPACITÉ DE COMPATIBILITÉ D'UNE CELLULE AVEC UNE MODULATION DE LIAISON MONTANTE D'ORDRE SUPÉRIEUR

(30) Priority: 21.03.2007 CN 200710087252
(43) Date of publication of application: 30.12.2009
(73) Proprietor: ZTE Corporation, Shenzhen, Guangdong 518057 (CN)
(72) Inventor: KE, Yazhu, Guangdong 518057 (CN); ZHANG, Jian, Guangdong 518057 (CN)
(74) Representative: Hatzmann, Martin
(86) International application number: PCT/CN2007/003403
(87) International publication number: WO 2008/113233

(56) References cited:
- WO-A1-01/50669
- CN-A- 1 859 788
- GB-A- 2 382 273
- GB-A- 2 382 273
- KR-A- 20040 058 426
- KR-A- 20060 026 722
- US-A1- 2005 207 359
- RNSAP EDITOR: "Output for RNSAP from the Tabular Format Ad Hoc â Editorâ s proposal", 3GPP DRAFT; R3-99H73 25.423 V1.5.4 - TABULAR FORMAT AD HOC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. Paris, France; 19991206 - 19991210, 20 December 1999 (1999-12-20), XP050607915, [retrieved on 1999-12-20]
- "3rd Generation Partnership Project (3GPP); Technical Specification Group (TSG) RAN UTRAN Iur Interface RNSAP Signalling [UMTS 25.423]", 3GPP STANDARD; TS 25.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.4.0, 1 September 1999 (1999-09-01), pages 1-68, XP050368474,

## Description

### Filed of the Invention

The present invention relates to radio communication system, and in particular to a method and device of reporting the capability of a cell to support uplink high-order modulation, in which a drift radio network controller (DRNC) is used for reporting whether the relative cell controlled by it supports uplink high-order modulation.

### Background of the Invention

An access network comprises one or more radio network subsystems, each of which is a sub-network of the access network and comprises a radio network controller and one or more nodes B. The access network controller is a network element responsible for controlling the radio resource of the access network. The main function of the Node B is to process the air interface physical layer and besides to perform some basic management operation on radio resource.

When a user equipment (UE) is setting up communication with a plurality of radio network controllers, if different radio network controls are connected via Iur port, the radio network controller responsible for linking the UE and the core network is referred to as serving radio network controller (SRNC), and the radio network controller responsible for transmitting the signaling and data of that UE but not linking it with the core network is referred to as drift radio network controller (DRNC). In addition, the DRNC is further responsible for transmitting to the SRNC the supporting capability of the cell of Node B under its' control.

In the technology optimization for existing system, in order to improve users' experience quality and system throughout, the high speed uplink packet access technology is continuously developed and so far 16QAM high-order modulation mode has been introduced.

Thus, because the technology is newly introduced, only new Node B supports it, while old Node B does not support it. The terminal supporting this technology can utilize the function of the technology only when being cooperated by the Node B which supports this technology. During making the decision whether to use this technology, the access network side needs to take the backward compatibility into account and to determine whether Node B can use the technology, so as to make an exact decision.

Therefore, it is necessary to provide a method and device for reporting the capability of a cell to support uplink high-order modulation, in which a drift radio network controller is used to report whether the relative cell controlled by it supports uplink high-order modulation, in order to solve the above problem.

It is noted that publication US 2005/207359 discloses an enhanced uplink dedicated channel wherein parameters are defined for use on an interface between network elements to enable a configuration setup of an enhanced radio uplink. It is further noted that patent publication WO 01/50669 discloses a self-optimizing multi-variable point to multipoint communication system. The wireless physical layer and the wireless media-access-control layer collectively include a set of parameters, which are adaptively modified by a base station controller for communication with a plurality of customer premises equipment.

### Summery of the Invention

Therefore, in order to solve the above problem, the present invention provides a method and device for reporting the capability of a cell to support uplink high-order modulation, in which DRNC is used to report whether the relative cell controlled by it supports uplink high-order modulation. In this method and device, DRNC is used to report SRNC whether the relative cell controlled by it supports uplink high-order modulation to, thus enabling the SRNC to obtain the information to determine whether to employ uplink high-order modulation on the UE.

In one aspect of the present invention, it provides a method for reporting the capability of a cell to support uplink high-order modulation, in which the DRNC is used for reporting whether the relative cell controlled by it supports uplink high-order modulation, comprising the following steps: after receiving a request message from the SRNC, the DRNC reports via signaling to the SRNC the information about the capability of the relative cell to support uplink high-order modulation.

Meanwhile, the request message may comprise any one of the following: radio link setup request message and radio link addition request message. The signaling may comprise any one of the following or the combination thereof: radio link setup response message, radio link setup failure message, radio link addition response message, and radio link addition failure message.

According to one aspect of the present invention, when the DRNC receives a radio link setup request message or a radio link addition request message and one or more desired links have been setup or added successfully, the information about the capability of the relative cell to support uplink high-order modulation is carried in the radio link setup response message or a radio link addition response message which is delivered to the SRNC.

Optionally, when the DRNC receives a radio link setup request message or a radio link addition request message and some of the plural links have been successfully setup or added but some of those have been failed to be setup or added, the information about the capability of the relative cell to support uplink high-order modulation is carried in the radio link setup failure message or a radio link addition failure message which is delivered to the SRNC.

According to one aspect of the present invention, the relative cell, including one or more cells, is the neighboring cell with successfully setup or added links after the DRNC receives the said request message. The reporting using signaling can be effected by adding the information about the capability of supporting uplink high-order modulation into the value of the cell capability container of the existing information cell.

In addition, according to one aspect of the present invention, the capability of supporting uplink high-order modulation can be represented in form of bit with "0" denoting not-supporting uplink high-order modulation and "1" denoting supporting uplink high-order modulation. In the information about the capability of supporting uplink high-order modulation, the capability of supporting uplink high-order modulation is indicated by adding the expanded cell capability information. The information about the supporting capability for uplink high-order modulation is represented by the supporting indication or the not-supporting indication.

According to one aspect of the present invention, the capability of supporting uplink high-order modulation may comprise any one of the following or the combination thereof: uplink 16QAM supporting capability, 64QAM supporting capability, OQAM supporting capability, the supporting capability for all modulation modes of 16QAM and QAM with less levels, the supporting capability for all modulation modes of 64QAM and QAM with less levels, and the supporting capability for all modulation modes of OQAM and QAM with less levels.

According to another aspect of the present invention, it provides a device for reporting the capability of a cell to support uplink high-order modulation, in which DRNC is used to report whether the relative cell controlled by it supports uplink high-order modulation and the device can comprise a reporting unit for reporting via signaling to SRNC the information about the capability of the relative cell to support uplink high-order modulation, after receiving the request message from SRNC.

Meanwhile, the request message can comprise any one of the following: radio link setup request message and radio link addition request message. The signaling can comprise any one of the following: radio link setup response message, radio link setup failure message, radio link addition response message, and radio link addition failure message.

According to another aspect of the present invention, when the DRNC receives a radio link setup request message or a radio link addition request message and one or more desired links have been setup or added successfully, the information about the capability of the relative cell to support uplink high-order modulation is carried in the radio link setup response message or the radio link addition response message delivered to the SRNC by the reporting unit.

According to another aspect of the present invention, when the DRNC receives a radio link setup request message or a radio link addition request message and some of the plural links have been successfully setup or added while some of those have been failed to be setup or added, the information about the capability of the relative cell to support uplink high-order modulation is carried in the radio link setup failure message or the radio link addition failure message delivered to the SRNC by the reporting unit.

According to another aspect of the present invention, the relative cell, including one or more cells, may be the neighboring cell with successfully setup or added links after the DRNC receives the request message.

In addition, the reporting using signaling can be effected by adding the information about the capability of supporting uplink high-order modulation into the cell capability container value of the existing information cell. The supporting capability for uplink high-order modulation can be represented in form of bit with "0" denoting not-supporting uplink high-order modulation and "1" denoting supporting uplink high-order modulation.

In the information about the supporting capability for uplink high-order modulation, the supporting capability for uplink high-order modulation can be indicated by adding the expanded cell capability information. The information about the supporting capability for uplink high-order modulation is represented by indicating the supporting or indicating the not-supporting.

According to another aspect of the present invention, the supporting capability for uplink high-order modulation may comprise any one of the following or the combination thereof: uplink 16QAM supporting capability, 64QAM supporting capability, OQAM supporting capability, the supporting capability for all modulation modes of 16QAM and the QAM with less levels, the supporting capability for all modulation modes of 64QAM and the QAM with less levels, the supporting capability for all modulation modes of OQAM and the QAM with less levels.

Therefore, the present invention provides a method and device in which DRNC is used for reporting the capability of the cell controlled by it to support uplink high-order modulation, wherein the DRNC is used to report to the SRNC whether the cell controlled by the DRNC supports uplink high-order modulation, such that the SRNC obtain the information to determine whether uplink high-order modulation method is used on the UE.

Other features and advantages of the present invention will be set forth in the following description, and become obvious partly from the description, or can be understood through implementing the present invention. The purposes and other advantages of the present invention can be achieved and obtained through the structures specified by the specification, claims and drawings.

### Brief Description of the Drawings

The drawings, provided for further understanding the present invention, are constitutes a part of the Specification and used for explaining the present invention along with the embodiments of the present invention, without limiting the present invention, in which:
Fig.1 is an interaction diagram of the method for reporting the capability of a cell to support uplink high-order modulation according to a first embodiment of the present invention;
Fig.2 is an interaction diagram of the method for reporting the capability of a cell to support the uplink high-order modulation according to the second embodiment of the present invention; and
Fig.3 is a block diagram of the device for reporting the capability of a cell to support uplink high-order modulation according to the present invention.

### Detailed Description

The present invention will be described in connection with the drawings. It is to be noted that the preferred embodiments detailed herein are only used for explaining and illustrating the present invention, not for the purpose of limiting the present invention.

The object of the present invention is to provide a method and device in which DRNC is used for reporting the capability of the cell controlled by it to support uplink high-order modulation, wherein the DRNC is used to report to the SRNC whether the cell controlled by the DRNC supports uplink high-order modulation, such that the SRNC obtains the information to determine whether the uplink high-order modulation method is used on the UE.

The method for reporting the capability of a cell to support uplink high-order modulation according to the present invention comprises one step: the DRNC reports the capability of the relative cell to support uplink high-order modulation by using signaling. In particular, after the DRNC receives the request message from SRNC, the DRNC reports via signaling to SRNC the information about the capability of the relative cell to support uplink high-order modulation

Meanwhile, the mentioned signaling is any one of the following messages:
(1) radio link setup response message, which is triggered by radio link setup request message;
(2) radio link addition response message, which is triggered by radio link addition request message;
(3) radio link setup failure message, which is triggered by radio link setup request message; and
(4) radio link addition failure message, which is triggered by radio link addition request message.

The relative cell is the neighboring cell with successfully setup or added links after the DRNC receives the request message, and the relative cell may be single or plural.

When the DRNC receives radio link setup request message or radio link addition request message and one or more desired links have been setup successfully, the information on the neighboring cell with successfully setup or added links is carried in the radio link setup response message or radio link addition response message.

Optionally, when the DRNC receives the radio link setup request message or the radio link addition request message in which plural radio links need to be setup or added wherein some of the links are successfully setup or added while some of the links are failed to be setup or added, the information on the relative cell with successfully setup and added links is carried in the radio link setup failure message or the radio link addition failure message.

Uplink high-order modulation mode refers to the modulation mode of 16QAM, or 64QAM, or OQAM.

In addition, the following method can be used to indicate the information about whether to support high-order modulation:
1. adding the supporting capabilities for uplink 16QAM, and/or 64QAM, and/or OQAM into the value of the "cell capability container" of the existing information cell, as in form of bit and with "0" indicating not-supporting and "1" indicating supporting;
2. adding the supporting capabilities for uplink 16QAM, and/or all modulation modes of 64QAM and the QAM with less levels, and/or all modulation modes of OQAM and the QAM with less levels into the value of the "cell capability container" of the existing information cell, as in form of bit and with "0" indicating not-supporting and "1" indicating supporting;
3. adding the support capabilities for all modulation modes of uplink 16QAM and the QAM with less levels, and/or all modulation modes of 64QAM and the QAM with less levels, and/or all modulation modes of OQAM and the QAM with less levels into the value of the "cell capability container" of the existing information cell, as in form of bit and with "0" indicating not-supporting and "1" indicating supporting; or
4. adding the expanded cell capability information.

Meanwhile, the cell capability information indicates high-order modulation supporting information by the following method:
(1) the supporting indication of 16QAM, and/or the supporting indication of 64QAM, and/or the supporting indication of OQAM;
(2) the supporting indication of 16QAM, and/or the supporting indication of all modulation capabilities of 64QAM and the QAM with less levels, and/or the supporting indications of all modulation capabilities of OQAM and the QAM with less levels; and
(3) the supporting indication of all modulation capabilities of 16QAM and the QAM with less levels, and/or the supporting indication of all modulation capabilities of 64QAM and the QAM with less levels, and/or the supporting indication of all modulation capabilities of OQAM and the QAM with less levels.

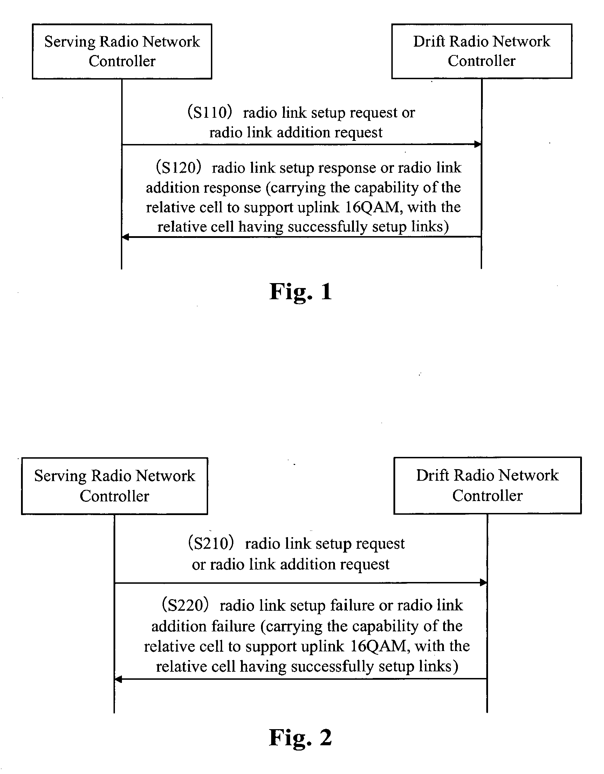

Fig.1 is an interaction diagram of the method for reporting the capability of a cell to support uplink high-order modulation according to a first embodiment of the present invention; and Fig.2 is an interaction diagram of the method for reporting the capability of a cell to support uplink high-order modulation according to a second embodiment of the present invention. The method for reporting the capability of a cell to support uplink high-order modulation will be described in connection with Fig. 1 and Fig.2 in the following description.

### Embodiment 1

Fig.1 is the interaction diagram of the method for reporting the capability of a cell to support uplink high-order modulation according to the first embodiment of the present invention. As shown in Fig.1, there is provided a method in which DRNC reports the capability of the cell controlled by it to support uplink high-order modulation through the process of successfully setup or added links. The method can comprise the following steps:
Step S110, the SRNC sends to the DRNC a radio link setup request message or a radio link addition request message; and
Step S120, when the DRNC has successfully setup or added the links needed to be setup or added, the DRNC sends to the SRNC a radio link setup response message or a radio link addition response message in which the information about the capability of the neighboring cell to support uplink 16QAM is carried, with the neighboring cell having successfully setup links.

### Embodiment 2

Fig.2 is the interaction diagram of the method for reporting the capability of a cell to support uplink high-order modulation according to the second embodiment of the present invention. As shown in Fig.2, there is provided a method in which the DRNC reports the capability of the cell controlled by the DRNC to support uplink high-order modulation through the process of unsuccessfully setup or added links. The method may comprise the following steps:
Step S210, the SRNC sends to the DRNC the radio link setup request message or the radio link addition request message; and
Step S220, when the DRNC has partly setup or added the links needed to be setup or added, the DRNC sends to the SRNC the radio link setup failure message or the radio link addition failure message in which the information about the capability of the neighboring cell to support uplink 16QAM is carried, with the neighboring cell having successfully setup links.

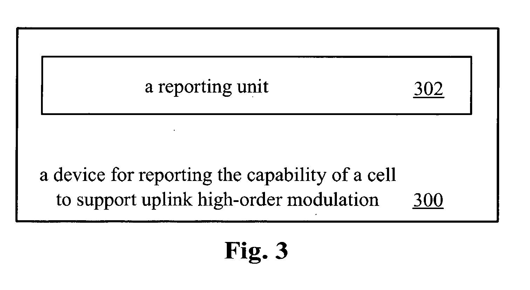

Fig.3 is the block diagram of the device 300 for reporting the capability of a cell to support uplink high-order modulation according to the present invention. As shown in Fig.3, the device comprises: a reporting unit 302 which reports via signaling to the SRNC the information about the capability of the relative cell to support uplink high-order modulation, after receiving the request message from the SRNC.

Meanwhile, the request message can comprise any one of the following: radio link setup request message and radio link addition request message. The signaling can comprise any one of the following: radio link setup response message, radio link setup failure message, radio link addition response message, and radio link addition failure message.

When the DRNC receives the radio link setup request message or the radio link addition request message and one or more desired links have been setup or added successfully, the information about the capability of the relative cell to support uplink high-order modulation is carried in the radio link setup response message or the radio link addition response message delivered to the SRNC by the reporting unit.

When the DRNC receives the radio link setup request message or the radio link addition request message and some of the plural links have been successfully setup or added but some of those have been failed to be setup or added, the information about the capability of the relative cell to support uplink high-order modulation is carried in the radio link setup failure message or the radio link addition failure message delivered to the SRNC by the reporting unit.

Meanwhile, the relative cell, including one or more cells, is the neighboring cell with successfully setup or added links after the DRNC has received the request message.

In addition, the reporting using signaling can be effected by adding the information about the supporting capability for uplink high-order modulation into the each of the cell capability container of the existing information cell. The supporting capability for uplink high-order modulation can be indicated in form of bit, with "0" denoting not-supporting uplink high-order modulation, and "1" denoting supporting uplink high-order modulation.

In the information about the supporting capability for uplink high-order modulation, the supporting capability for uplink high-order modulation can be indicated by adding expanded cell capability information. The information about the supporting capability for uplink high-order modulation is represented by the supporting indication or the not-supporting indication.

The supporting capability for uplink high-order modulation can comprise any one of the following or the combination thereof: uplink 16QAM supporting capability, 64QAM supporting capability, OQAM supporting capability, the support capabilities for all modulation modes of 16QAM and the QAM with less levels, the supporting capabilities for all modulation modes of 64QAM and the QAM with less levels, the support capabilities for all modulation modes of OQAM and the QAM with less levels.

Collectively, the present invention provides a method and device in which the DRNC reports the capability of the cell controlled by the DRNC to support uplink high-order modulation, wherein the DRNC reports to the SRNC whether the cell controlled by the DRNC supports uplink high-order modulation, such that the SRNC can obtain the information to determine whether to use uplink high-order modulation method on the UE.

## Claims

1. A method for reporting the capability of a cell to support uplink high-order modulation, in which a drift radio network controller, DRNC, is used for reporting whether the relative cell supports uplink high-order modulation, **characterized in that** comprising the following steps:
after receiving a request message from a serving radio network controller, SRNC, said drift radio network controller reports via signaling to the serving radio network controller the information about the capability of the relative cell to support the uplink high-order modulation.

2. The method according to Claim 1, **characterized in that** said request message comprises any one of the following: radio link setup request message, and radio link addition request message.

3. The method according to Claim 2, **characterized in that** said signaling comprises any one of the following or the combination thereof: radio link setup response message, radio link setup failure message, radio link addition response message, and radio link addition failure message.

4. The method according to Claim 3, **characterized in that,** when said drift radio network controller receives the radio link setup request message or the radio link addition request message and one or more desired links have been setup or added successfully, the information about the capability of the relative cell to support the uplink high-order modulation is carried in the radio link setup response message or the radio link addition response message delivered to said serving radio network controller.

5. The method according to Claim 3, **characterized in that**, when said drift radio network controller receives the radio link setup request message or the radio link addition request message and some of the plural links have been successfully setup or added but some of those have been failed to be setup or added, the information about the capability of the relative cell to support the uplink high-order modulation is carried in the radio link setup failure message or the radio link addition failure message delivered to said serving radio network controller.

6. The method according to anyone of Claims 1-5, **characterized in that**, said relative cell is the neighboring cell with successfully setup or added links after said drift radio network controller receives said request message and said relative cell includes one or more cells.

7. The method according to anyone of Claims 1-5, **characterized in that,** said reporting using signaling are effected by adding the information about the supporting capability for the uplink high-order modulation into the value of the cell capability container of the existing information cell.

8. The method according to Claim 7, **characterized in that** said supporting capability for the uplink high-order modulation is indicated in the form of bit, with "0" denoting not-supporting the uplink high-order modulation, and "1" denoting supporting the uplink high-order modulation.

9. The method according to anyone of Claims 1-5, **characterized in that**, in the information about the supporting capability for the uplink high-order modulation, the supporting capability for the uplink high-order modulation is indicated by adding expanded cell capability information.

10. The method according to Claim 9, **characterized in that** the information about the support capability for the uplink high-order modulation is represented by a supporting indication or a not-supporting indication.

11. The method according to Claim 1, **characterized in that** the supporting capability for the uplink high-order modulation comprises any one of the following or the combination thereof: uplink 16QAM supporting capability, 64QAM supporting capability, OQAM supporting capability, the support capabilities for all modulation modes of 16QAM and the QAM with less levels, the support capabilities for all modulation modes of 64QAM and the QAM with less levels, the support capabilities for all modulation modes of OQAM and the QAM with less levels.

12. A device (300) for reporting the capability of a cell to support uplink high-order modulation, in which a drift radio network controller, DRNC, is used for reporting whether relative cell supports uplink high-order modulation, **characterized in that** the device comprises:
a reporting unit (302), which, after receiving a request message from a serving radio network controller, SRNC, is adapted to report via signaling to the serving radio network controller the information about the capability of the relative cell to support the uplink high-order modulation.

13. The device according to Claim 12, wherein the device is arranged to report using signaling by adding the information about the supporting capability for the uplink high-order modulation into the value of the cell capability container of the existing information cell, and to indicate supporting capability for the uplink high-order modulation in the form of bit, wherein "0" denotes not-supporting the uplink high-order modulation, and "1" denotes supporting the uplink high-order modulation.

14. The device according to Claim 12, wherein the device is arranged to represent, in the information about the supporting capability for the uplink high-order modulation, the supporting capability for the uplink high-order modulation by adding the expanded cell capability information, and to represent the information about the supporting capability for the uplink high-order modulation by a supporting indication or a not-supporting indication.

15. A computer program product for reporting the capability of a cell to support uplink high-order modulation, in which a drift radio network controller is used for reporting whether the relative cell supports uplink high-order modulation, which computer program product comprises instructions for causing a processor to perform the steps of method of:
after receiving a request message from a serving radio network controller, SRNC, said drift radio network controller reports via signaling to the serving radio network controller the information about the capability of the relative cell to support the uplink high-order modulation.

## Patentansprüche

1. Verfahren zum Melden der Unterstützungsfähigkeit einer Zelle für Aufwärtsstreckenmodulation höherer Ordnung, in dem ein DRNC (Drift Radio Network Controller) verwendet wird, um zu melden, ob die relative Zelle Aufwärtsstreckenmodulation höherer Ordnung unterstützt, **dadurch gekennzeichnet, dass** es folgende Schritte umfasst:
nach dem Empfangen einer Anfragemeldung von einem SRNC (Serving Radio Network Controller) meldet der DRNC über Signalisierung dem SRNC die Information über die Fähigkeit der relativen Zelle, die Aufwärtsstreckenmodulation höherer Ordnung zu unterstützen.

2. Verfahren nach Anspruch 1, **dadurch gekennzeichnet, dass** die Anfragemeldung ein beliebiges der Folgenden umfasst: Anfragemeldung zum Einrichten einer Funkverbindung und Anfragemeldung zum Hinzufügen einer Funkverbindung.

3. Verfahren nach Anspruch 2, **dadurch gekennzeichnet, dass** die Signalisierung ein beliebiges der Folgenden oder eine Kombination davon umfasst: Antwortmeldung zum Einrichten einer Funkverbindung, Fehlermeldung zum Einrichten einer Funkverbindung, Antwortmeldung zum Hinzufügen einer Funkverbindung und Fehlermeldung zum Hinzufügen einer Funkverbindung.

4. Verfahren nach Anspruch 3, **dadurch gekennzeichnet, dass**, wenn der DRNC die Anfragemeldung zum Einrichten der Funkverbindung oder die Anfragemeldung zum Hinzufügen der Funkverbindung empfängt und eine oder mehrere gewünschte Verbindungen erfolgreich eingerichtet oder hinzugefügt wurden, die Information über die Fähigkeit der relativen Zelle, die Aufwärtsstreckenmodulation höherer Ordnung zu unterstützen, in der Antwortmeldung zum Einrichten der Funkverbindung oder der Antwortmeldung zum Hinzufügen der Funkverbindung, abgegeben an den SRNC, übertragen wird.

5. Verfahren nach Anspruch 3, **dadurch gekennzeichnet, dass** der DRNC die Anfragemeldung zum Einrichten der Funkverbindung oder die Anfragemeldung zum Hinzufügen der Funkverbindung empfängt und einige der mehreren Verbindungen erfolgreich eingerichtet oder hinzugefügt wurden aber einige davon nicht eingerichtet oder hinzugefügt wurden, die Information über die Fähigkeit der relativen Zelle, die Aufwärtsstreckenmodulation höherer Ordnung zu unterstützen, in der Fehlermeldung zum Einrichten der Funkverbindung oder der Fehlermeldung zum Hinzufügen der Funkverbindung, abgegeben an den SRNC, übertragen wird.

6. Verfahren nach einem der Ansprüche 1-5, **dadurch gekennzeichnet, dass** die relative Zelle die benachbarte Zelle zur erfolgreich eingerichteten oder hinzugefügten Zellen ist, nachdem der DRNC die Anfragemeldung empfängt und die relative Zelle eine oder mehr Zellen enthält.

7. Verfahren nach einem der Ansprüche 1-5, **dadurch gekennzeichnet, dass** die Meldung unter Verwendung von Signalisierung erfolgt, indem die Information über die Unterstützungsfähigkeit für Aufwärtsstreckenmodulation höherer Ordnung zum Wert des Zellfähigkeitsbehälters der existierenden Informationszelle hinzugefügt wird.

8. Verfahren nach Anspruch 7, **dadurch gekennzeichnet, dass** die Unterstützungsfähigkeit für die Aufwärtsstreckenmodulation höherer Ordnung in Form eines Bit angezeigt wird, wobei "0" die Nichtunterstützung der Aufwärtsstreckenmodulation höherer Ordnung kennzeichnet und "1" die Unterstützung für die Aufwärtsstreckenmodulation höherer Ordnung kennzeichnet.

9. Verfahren nach einem der Ansprüche 1-5, **dadurch gekennzeichnet, dass** in der Information über die Unterstützungsfähigkeit für die Aufwärtsstreckenmodulation höherer Ordnung die Unterstützungsfähigkeit für die Aufwärtsstreckenmodulation höherer Ordnung durch Hinzufügen erweiterter Zellenfähigkeitsinformation angezeigt wird.

10. Verfahren nach Anspruch 9, **dadurch gekennzeichnet, dass** die Information über die Unterstützungsfähigkeit für die Aufwärtsstreckenmodulation höherer Ordnung durch eine Unterstützungsanzeige oder eine Nichtunterstützungsanzeige dargestellt wird.

11. Verfahren nach Anspruch 1, **dadurch gekennzeichnet, dass** die Unterstützungsfähigkeit für die Aufwärtsstreckenmodulation höherer Ordnung beliebige der Folgenden oder die Kombination davon umfasst: Aufwärtsstrecken 16QAM Unterstützungsfähigkeit, 64OQAM Unterstützungsfähigkeit, OQAM Unterstützungsfähigkeit, die Unterstützungsfähigkeiten für alle Modulationsmodi von 16QAM und QAM mit weniger Ebenen, die Unterstützungsfähigkeiten für alle Modulationsmodi von 64QAM und QAM mit weniger Ebenen, die Unterstützungsfähigkeiten für alle Modulationsmodi von OQAM und QAM mit weniger Ebenen.

12. Gerät (300) zum Melden der Unterstützungsfähigkeit einer Zelle für Aufwärtsstreckenmodulation höherer Ordnung, in dem ein DRNC (Drift Radio Network Controller) verwendet wird, um zu melden, ob eine relative Zelle Aufwärtsstreckenmodulation höherer Ordnung unterstützt, **dadurch gekennzeichnet, dass** das Gerät Folgendes umfasst:
eine Meldeeinheit (302), die, nach dem Empfangen einer Anfragemeldung von einem SRNC (Serving Radio Network Controller, über Signalisierung dem SRNC die Information über die Unterstützungsfähigkeit der relativen Zelle für die Aufwärtsstreckenmodulation höherer Ordnung meldet.

13. Gerät nach Anspruch 12, wobei das Gerät geeignet ist, um unter Verwendung von Signalisierung durch Hinzufügen der Information über die Unterstützungsfähigkeit für die Aufwärtsstreckenmodulation höherer Ordnung zu dem Wert des Zellenfähigkeitbehälters der existierenden Informationszelle zu melden und die Unterstützungsfähigkeit für die Aufwärtsstreckenmodulation höherer Ordnung in Bitform anzuzeigen, wobei "0" die Nichtunterstützung der Aufwärtsstreckenmodulation höherer Ordnung kennzeichnet und "1" die Unterstützung der Aufwärtsstreckenmodulation höherer Ordnung kennzeichnet.

14. Gerät nach Anspruch 12, wobei das Gerät geeignet ist, um in der Information über die Unterstützungsfähigkeit für die Aufwärtsstreckenmodulation höherer Ordnung die Unterstützungsfähigkeit für die Aufwärtsstreckenmodulation höherer Ordnung dargestellt wird, indem die erweiterte Fähigkeitsinformation der Zelle hinzugefügt wird, und die Information über die Unterstützungsfähigkeit für die Aufwärtsstreckenmodulation höherer Ordnung durch eine Unterstützungsanzeige oder eine Nichtunterstützungsanzeige darzustellen.

15. Computerprogrammprodukt zum Melden der Unterstützungsfähigkeit einer Zelle für Aufwärtsstreckenmodulation höherer Ordnung, in dem ein DRNC (Drift Radio Network Controller) verwendet wird, um zu melden, ob die relative Zelle Aufwärtsstreckenmodulation höherer Ordnung unterstützt, wobei das Computerprogrammprodukt Anweisungen umfasst, um einen Prozessor zur Ausführung der Schritte eines Verfahrens zu veranlassen, in dem:
nach dem Empfangen einer Anfragemeldung von einem SRNC (Serving Radio Network Controller) der DRNC über Signalisierung an den SRNC die Information über die Fähigkeit der relativen Zelle zur Unterstützung der Aufwärtsstreckenmodulation höherer Ordnung meldet.

## Revendications

1. Procédé pour rapporter la capacité d'une cellule à supporter une modulation d'ordre élevé de liaison montante, dans lequel un contrôleur de réseau radio de dérive, DRNC, est utilisé pour rapporter si la cellule relative supporte une modulation d'ordre élevé de liaison montante, **caractérisé en ce qu'**il comprend les étapes suivantes :
après la réception d'un message de demande en provenance d'un contrôleur de réseau radio de desserte, SRNC, ledit contrôleur de réseau radio de dérive rapporte via une signalisation au contrôleur de réseau radio de desserte les informations concernant la capacité de la cellule relative à supporter la modulation d'ordre élevé de liaison montante.

2. Procédé selon la revendication 1, **caractérisé en ce que** ledit message de demande comprend l'un quelconque des éléments suivants : un message de demande d'établissement de liaison radio, et un message de demande d'ajout de liaison radio.

3. Procédé selon la revendication 2, **caractérisé en ce que** ladite signalisation comprend l'un quelconque des éléments suivants ou la combinaison de ceux-ci : un message de réponse d'établissement de liaison radio, un message d'échec d'établissement de liaison radio, un message de réponse d'ajout de liaison radio, et un message d'échec d'ajout de liaison radio.

4. Procédé selon la revendication 3, **caractérisé en ce que**, lorsque ledit contrôleur de réseau radio de dérive reçoit le message de demande d'établissement de liaison radio ou le message de demande d'ajout de liaison radio et qu'une ou plusieurs liaisons souhaitées ont été établies ou ajoutées avec succès, les informations concernant la capacité de la cellule relative à supporter la modulation d'ordre élevé de liaison montante sont acheminées dans le message de réponse d'établissement de liaison radio ou le message de réponse d'ajout de liaison radio remis audit contrôleur de réseau radio de desserte.

5. Procédé selon la revendication 3, **caractérisé en ce que**, lorsque ledit contrôleur de réseau radio de dérive reçoit le message de demande d'établissement de liaison radio ou le message de demande d'ajout de liaison radio et que certaines de la pluralité de liaisons ont été établies ou ajoutées avec succès mais que certaines d'entre elles n'ont pas réussi à être établies ou ajoutées, les informations concernant la capacité de la cellule relative à supporter la modulation d'ordre élevé de liaison montante sont acheminées dans le message d'échec d'établissement de liaison radio ou le message d'échec d'ajout de liaison radio remis audit contrôleur de réseau radio de desserte.

6. Procédé selon l'une quelconque des revendications 1 à 5, **caractérisé en ce que**, ladite cellule relative est la cellule voisine avec des liaisons établies ou ajoutées avec succès après que ledit contrôleur de réseau radio de dérive reçoit ledit message de demande et ladite cellule relative inclut une ou plusieurs cellules.

7. Procédé selon l'une quelconque des revendications 1 à 5, **caractérisé en ce que**, ledit rapport utilisant une signalisation est effectué en ajoutant les informations concernant la capacité de support pour la modulation d'ordre élevé de liaison montante dans la valeur du conteneur de capacité de cellule de la cellule d'information existante.

8. Procédé selon la revendication 7, **caractérisé en ce que** ladite capacité de support pour la modulation d'ordre élevé de liaison montante est indiquée sous forme de bit, avec « 0 » signifiant ne supportant pas la modulation d'ordre élevé de liaison montante, et « 1 » signifiant supportant la modulation d'ordre élevé de liaison montante.

9. Procédé selon l'une quelconque des revendications 1 à 5, **caractérisé en ce que**, dans les informations concernant la capacité de support pour la modulation d'ordre élevé de liaison montante, la capacité de support pour la modulation d'ordre élevé de liaison montante est indiquée en ajoutant des informations de capacité de cellule expansées.

10. Procédé selon la revendication 9, **caractérisé en ce que** les informations concernant la capacité de support pour la modulation d'ordre élevé de liaison montante sont représentées par une indication de support ou une indication de non-support.

11. Procédé selon la revendication 1, **caractérisé en ce que** la capacité de support pour la modulation d'ordre élevé de liaison montante comprend l'un quelconque des éléments suivants ou la combinaison de ceux-ci : capacité de support 16QAM de liaison montante, capacité de support 64QAM, capacité de support OQAM, les capacités de support pour tous les modes de modulation de 16QAM et la QAM avec moins de niveaux, les capacités de support pour tous les modes de modulation de 64QAM et la QAM avec moins de niveaux, les capacités de soutien pour tous les modes de modulation d'OQAM et la QAM avec moins de niveaux.

12. Dispositif (300) pour rapporter la capacité d'une cellule à supporter une modulation d'ordre élevé de liaison montante, dans lequel un contrôleur de réseau radio de dérive, DRNC, est utilisé pour rapporter si une cellule relative supporte une modulation d'ordre élevé de liaison montante, **caractérisé en ce que** le dispositif comprend :
une unité de rapport (302), qui, après la réception d'un message de demande en provenance d'un contrôleur de réseau radio de desserte, SRNC, est adaptée pour rapporter via une signalisation au contrôleur de réseau radio de desserte les informations concernant la capacité de la cellule relative à supporter la modulation d'ordre élevé de liaison montante.

13. Dispositif selon la revendication 12, dans lequel le dispositif est agencé pour rapporter l'utilisation de signalisation en ajoutant les informations concernant la capacité de support pour la modulation d'ordre élevé de liaison montante dans la valeur du conteneur de capacité de cellule de la cellule d'information existante, et pour indiquer une capacité de support pour la modulation d'ordre élevé de liaison montante sous forme de bit, où « 0 » signifie ne supportant pas la modulation d'ordre élevé de liaison montante, et « 1 » signifie supportant la modulation d'ordre élevé de liaison montante.

14. Dispositif selon la revendication 12, dans lequel le dispositif est agencé pour représenter, dans les informations concernant la capacité de support pour la modulation d'ordre élevé de liaison montante, la capacité de support pour la modulation d'ordre élevé de liaison montante en ajoutant les informations de capacité de cellule expansées, et pour représenter les informations concernant la capacité de support pour la modulation d'ordre élevé de liaison montante par une indication de support ou une indication de non-support.

15. Produit de programme informatique pour rapporter la capacité d'une cellule à supporter une modulation d'ordre élevé de liaison montante, dans lequel un contrôleur de réseau radio de dérive, DRNC, est utilisé pour rapporter si la cellule relative supporte une modulation d'ordre élevé de liaison montante, lequel produit de programme informatique comprend des instructions pour amener un processeur à effectuer les étapes de procédé de :
après la réception d'un message de demande en provenance d'un contrôleur de réseau radio de desserte, SRNC, ledit contrôleur de réseau radio de dérive rapporte via une signalisation au contrôleur de réseau radio de desserte les informations concernant la capacité de la cellule relative à supporter la modulation d'ordre élevé de liaison montante.
